(19) Europäisches Patentamt
European Patent Office
Office européen des brevets

(11) **EP 0 584 566 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int Cl.⁶: **G05B 23/02**, G01D 21/00

(21) Anmeldenummer: **93112045.5**

(22) Anmeldetag: **28.07.1993**

(54) **Verfahren zur Fehlererkennung bei der Auswertung der Ausgangssignale eines Drehzahlsensors**

Method for fault detection in the analysis of output signals of an r.p.m. sensor

Procédé de détection du défaut dans l'analyse pour les signaux de sortie d'un détecteur de vitesse de rotation

(84) Benannte Vertragsstaaten:
**DE FR GB IT**

(30) Priorität: **17.08.1992 DE 4227113**

(43) Veröffentlichungstag der Anmeldung:
**02.03.1994 Patentblatt 1994/09**

(73) Patentinhaber: **ROBERT BOSCH GMBH
70442 Stuttgart (DE)**

(72) Erfinder:
• **Berger, Joachim, Dipl.-Ing.
D-73650 Winterbach (DE)**
• **Lutz, Peter, Dipl.-Ing.
D-74189 Weinsberg (DE)**

(56) Entgegenhaltungen:
**DE-A- 3 243 760          DE-A- 4 026 232
GB-A- 2 242 037          US-A- 4 509 110**

## Beschreibung

Stand der Technik

Die Erfindung geht aus von einem Verfahren zur Fehlererkennung bei der Auswertung der Ausgangssignale eines sich periodisch wiederholende Signale liefernden Sensors, z.B. eines Drehzahlsensors nach der Gattung des Hauptanspruchs.

Verfahren bzw. Vorrichtungen zur Auswertung der Ausgangssignale von Drehzahlsensoren sind insbesondere im Zusammenhang mit der Auswertung von Drehzahlsensoren bei Kraftfahrzeugen bekannt. Dabei ist beispielsweise auf der Welle, deren Drehzahl ermittelt werden soll, eine Scheibe befestigt, deren Oberfläche eine Vielzahl gleichartiger Markierungen aufweist, wobei eine fehlende Markierung als Bezugsmarke dient. Solche Scheiben werden von einem Sensor abgetastet, dessen Ausgangssignal eine drehzahlabhängige Impulsfolge darstellt.

Aus dem Vergleich der zeitlichen Abstände der einzelnen Impulse kann die Drehzahl bestimmt werden, außerdem kann die Bezugsmarke eindeutig erkannt werden. Dazu wird untersucht, ob sich der zeitliche Abstand zwischen zwei Impulsen in charakteristischer Weise vom vorhergehenden zeitlichen Abstand unterscheidet.

Eine solche Vorrichtung bzw. ein solches Verfahren, bei dem außerdem noch eine Drehzahlgeberüberwachung stattfindet, ist aus der nicht vorveröffentlichten deutschen Patentanmeldung P 42 10 933.7 bekannt. In dieser Druckschrift wird beschrieben, daß zur Bezugsmarkenerkennung und zur Geberüberwachung in einer Recheneinrichtung der Quotient aus zwei Zeitabständen gebildet wird und die Fehlererkennung durch Vergleich der jeweils gebildeten Quotienten mit Grenzwerten durchgeführt wird.

Aus der DE-OS 40 26 232 ist eine Einrichtung zur Überwachung eines Drehzahlgebers bei einer Brennkraftmaschine bekannt, bei der überprüft wird, ob beim Anlassen der Brennkraftmaschine der zu erwartende charakteristische Verlauf der Bordnetzspannung mit einem Spannungseinbruch und darauf folgenden Oszillationen auftritt. Tritt dieser Verlauf der Bordnetzspannung auf, ist sicher, daß die Brennkraftmaschine gestartet wurde. In diesem Fall muß auch das Ausgangssignal des Drehzahlgebers ein Ausgangssignal liefern, das einer bestimmten Drehzahl entspricht, falls dies nicht der Fall ist, liegt ein Defekt des Drehzahlgebers vor.

Aus der DE-OS 32 43 760 ist ein Verfahren und eine Einrichtung zur Überwachung der Funktion eines Prozessors bekannt, bei der eine sogenannte ,,Watchdog" erkennt, ob eine fehlerhafte Funktion des Prozessors vorliegt. Die Überwachungsschaltung ist so ausgestaltet, daß sie zuverlässig arbeitet und durch eine abgestufte Reaktion auf Fehler dazu beiträgt, die Funktion des Automatisierungssystems möglichst lange aufrechtzuerhalten. Aufgrund der gestuften Reaktion auf Fehlfunktionen führen vorübergehende Störungen nicht zu einem Ausfall des gesamten Systems. Erzielt wird die gestufte Fehlerreaktion, indem ein Zähler durch einen Oszillatortakt hochgezählt wird und hardwaremäßig vor Erreichen eines Schwellwertes wieder auf Null zurückgesetzt wird. Bei einer Fehlfunktion des Systems erfolgt die Rücksetzung nicht rechtzeitig und der Zähler erreicht den Schwellwert, wodurch eine Fehlerreaktion ausgelöst wird.

Aus der US-PS 4,509,110 ist ein System zur Defekterkennung bekannt, bei dem ein Fehlersignal erzeugt wird, wenn die Meßgröße eine bestimmte Bedingung nicht erfüllt. Dieses Fehlersignal wird aufintegriert und eine Fehleranzeige bzw. eine Fehlreaktion auf den Fehler erfolgt erst, wenn das Integral einen bestimmten Grenzwert erreicht. Wenn eine normale Funktionsfähigkeit des Systems erkannt wird, wird der Integrator wieder auf Null zurückgesetzt. Durch diese Vorgehensweise wird sichergestellt, daß nicht jede Fehlererkennung sofort zu einer Fehleranzeige führt. Damit wird beispielsweise sichergestellt, daß Spannungsspitzen nicht zu einer sofortigen Fehlererkennung führen.

Vorteile der Erfindung

Das erfindungsgemäße Verfahren zur Fehlererkennung bei der Auswertung der Ausgangssignale eines Drehzahlsensors mit den kennzeichnenden Merkmalen des Hauptanspruchs hat den Vorteil, daß eine sehr zuverlässig Defekterkennung möglich ist, die nicht bei jedem Fehler sofort anspricht, sondern unterscheidet zwischen schweren und leichten Fehlern und daher einen Defekt nicht unbedingt sofort anzeigt.

Besonders vorteilhaft ist, daß die Plausibilitätsuntersuchungen, die zur Fehlererkennung durchgeführt werden, ohne Mehraufwand in einem ohnehin vorhandenen Steuergerät ablaufen.

Weitere Vorteile der Erfindung sind durch die in den Unteransprüchen angegebenen Maßnahmen erzielbar.

Zeichnung

Ein Ausführungsbeispiel der Erfindung ist in der Zeichnung dargestellt und wird in der nachfolgenden Beschreibung näher erläutert.

Im einzelnen zeigt Figur 1 eine Einrichtung zur Drehzahlerfassung, mit der die vorliegende Erfindung realisiert werden kann, in Figur la ist der zugehörige Signalverlauf angegeben. In Figur 2 ist die erfindungsgemäße Signalverarbeitungseinrichtung als Blockschaltbild dargestellt und in Figur 3 ist ein erweitertes Blockschaltbild zur Signalanalyse angegeben. Diese drei Figuren sind teilweise bereits in der deutschen Patentanmeldung P 42 10 933.7 enthalten, wobei Figur 3 zusätzlich einen Fehlerzähler aufweist, mit dessen Hilfe das erfindungsgemäße Verfahren so durchführbar ist, daß nicht jede Nichtplausibilität eine Defektanzeige auslöst.

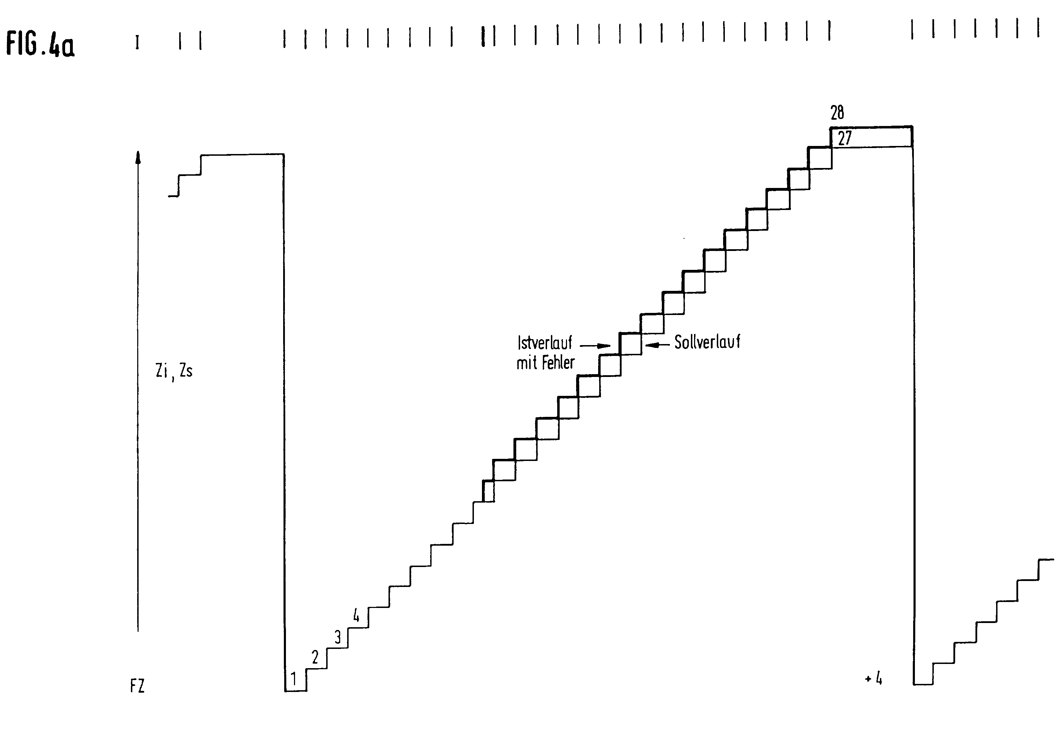

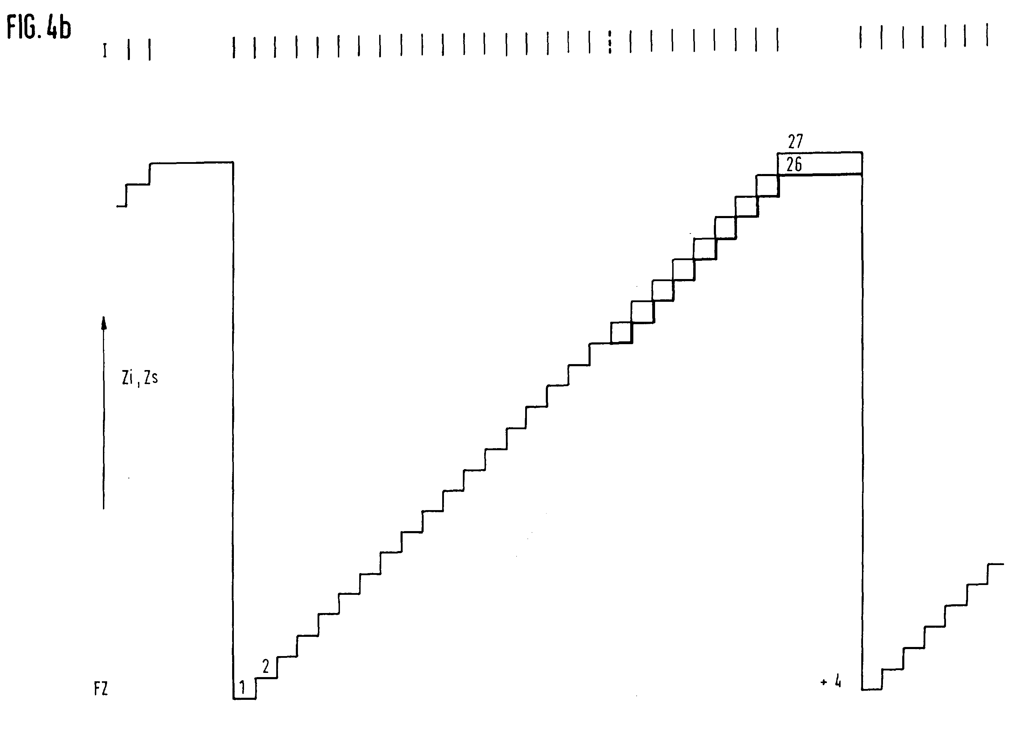

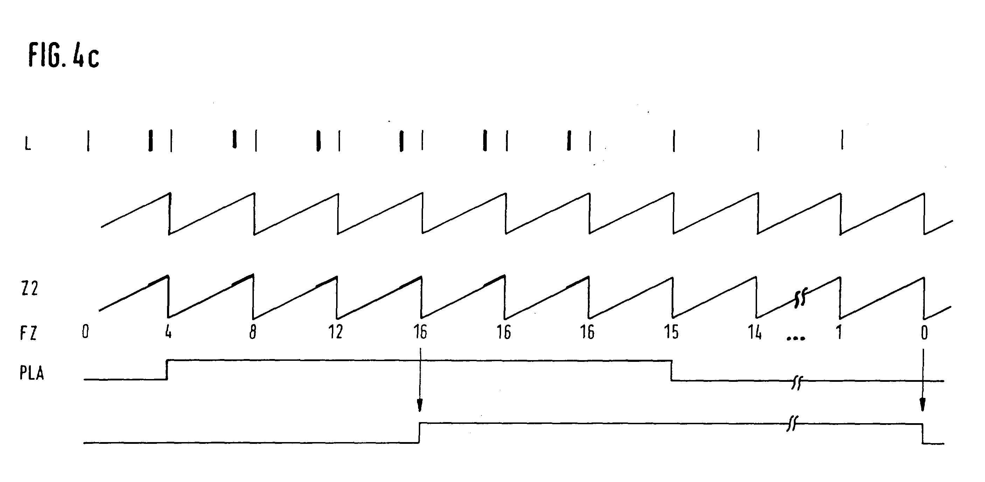

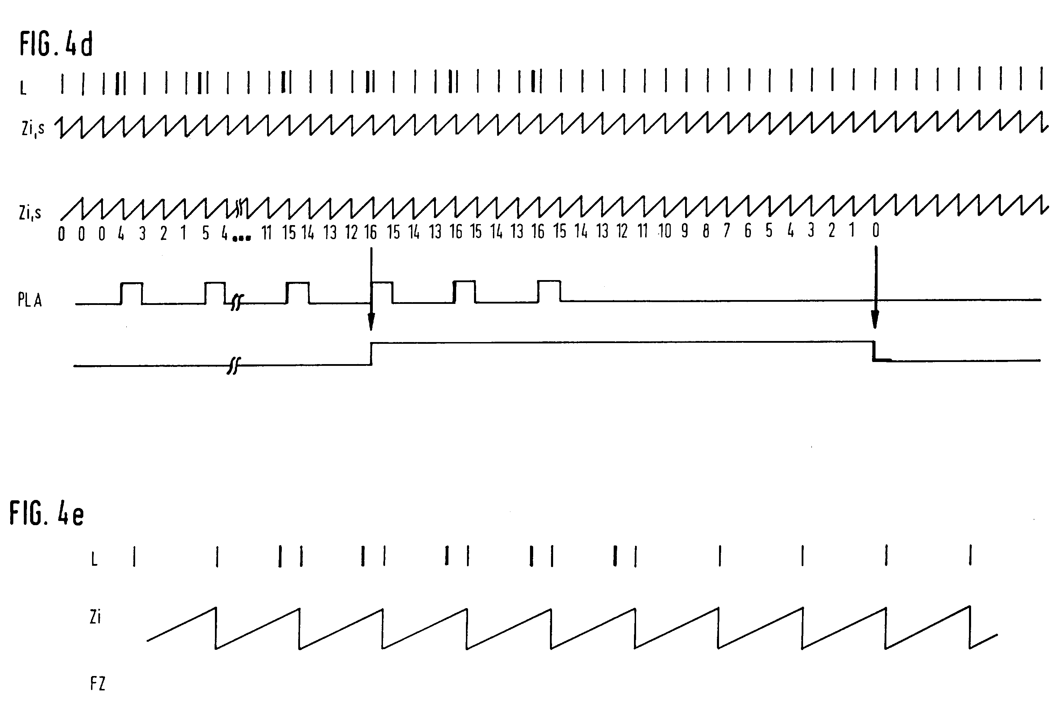

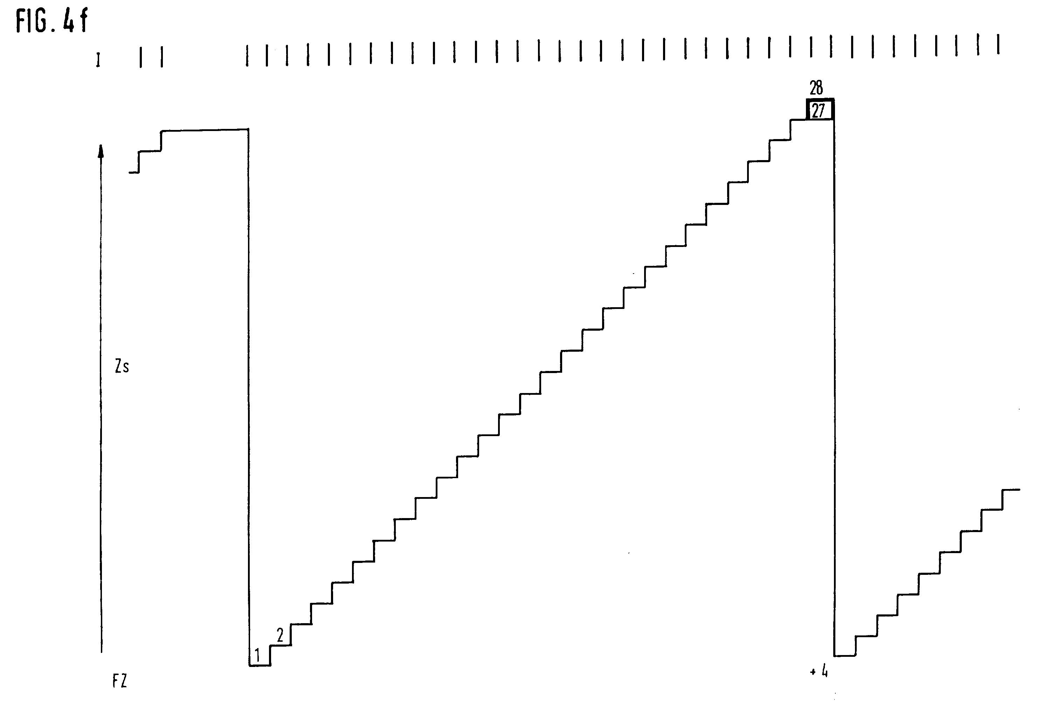

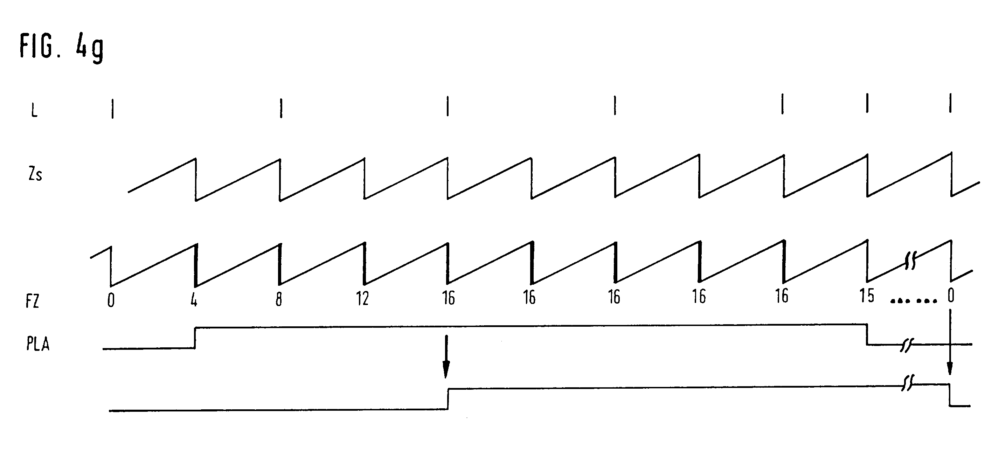

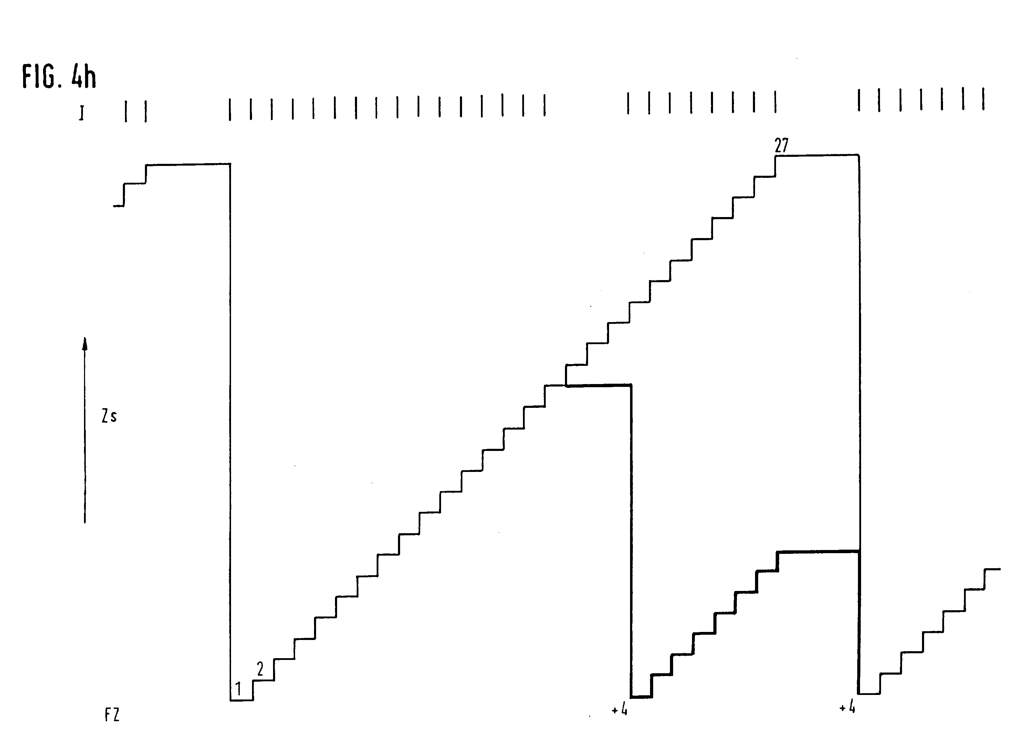

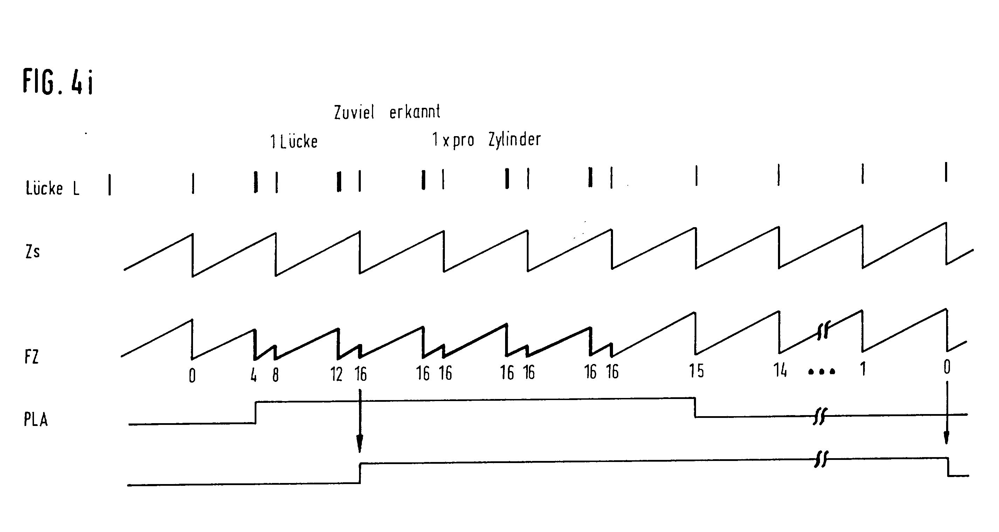

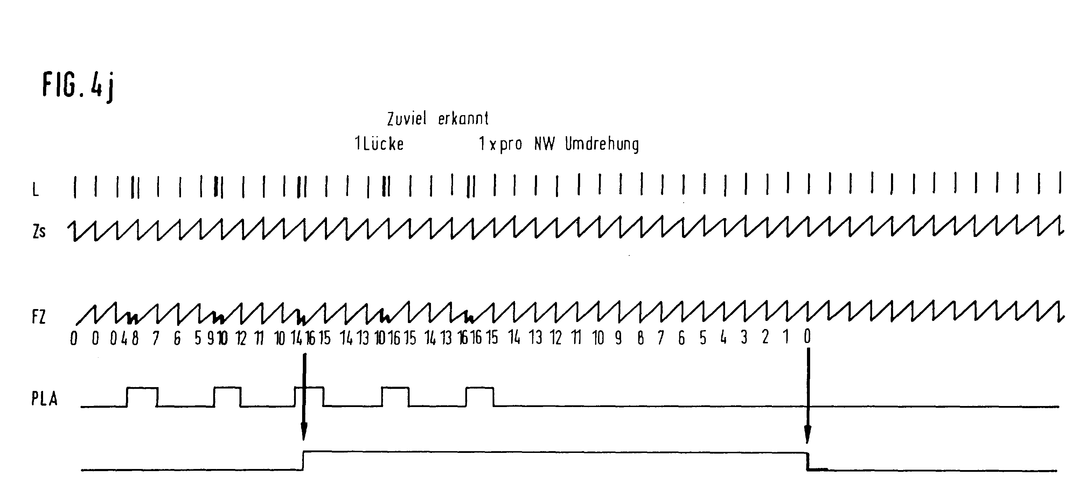

In den Figuren 4 a bis j sind Zählerstände eines Inkrementzählers und eines Fehlerzählers für verschiedene Störungen angegeben, ausserdem ist angegeben, ob Plausibilität vorliegt oder nicht, weiterhin ist erkennbar, wann ein Defekt angezeigt wird.

Beschreibung des Ausführungsbeispiels

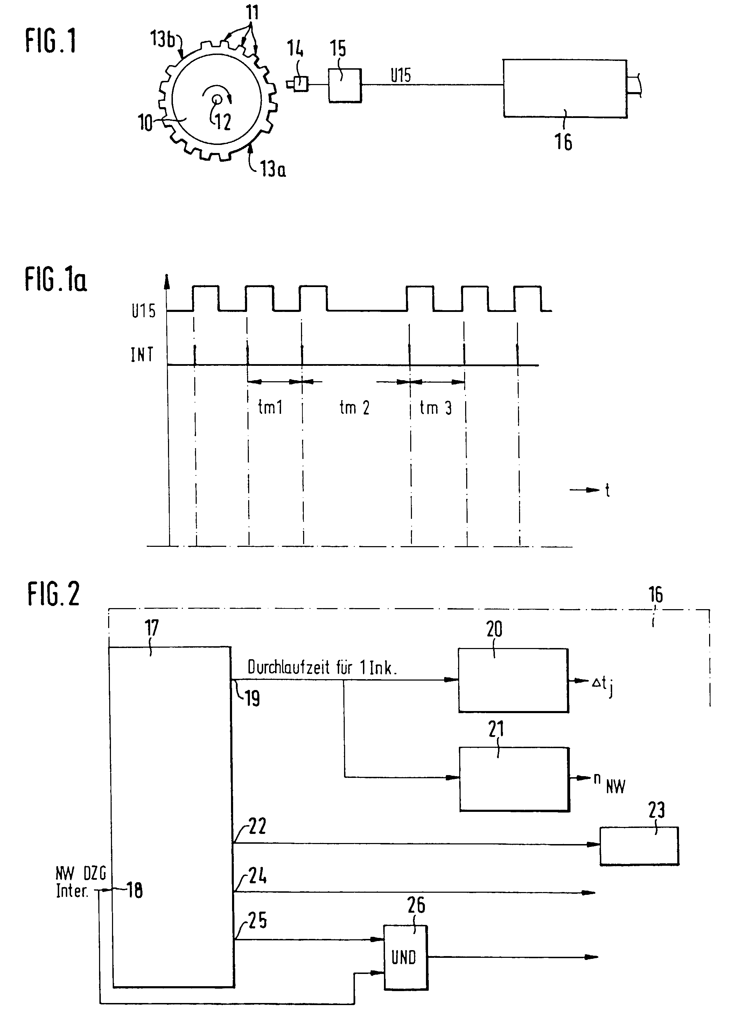

In den Figuren 1 bis 3 ist die bereits aus der deutschen Patentanmeldung P 42 10 933.7 bekannte Einrichtung zur Auswertung der Ausgangssignale eines Drehzahlsensors angegeben. Die nun folgende Beschreibung entspricht weitgehend der aus der genannten Patentanmeldung bekannten Beschreibung. Dabei stellt die bekannte Einrichtung sowie das bekannte Verfahren, mit dem Nicht-Plausibilitäten und Fehler bei der Drehzahlsensorsignalauswertung erkannt werden, eine mögliche Ausführungsform dar. Die fehlertolerante Defekterkennung kann sich auch an andere Auswerteeinrichtungen anschließen, Voraussetzung ist lediglich, daß statische und/oder dynamische Nicht-Plausibilitäten erkannt werden, diese Erkennung wird dann mit Hilfe eines Verfahrens, das mit Hilfe der in den Figuren 4a bis 4j aufgetragenen Zählerstände erläutert wird, ausgewertet.

In Figur 1 ist eine Einrichtung, die für die Durchführung des erfindungsgemäße Verfahren geeignet ist, aufgezeigt. Dabei ist eine Inkrementscheibe 10, die eine Vielzahl von gleichen Marken 11 an ihrer Oberfläche aufweist, auf einer Welle 12 befestigt, deren Drehzahl bestimmt werden soll. Diese Welle kann beispielsweise die Nockenwelle oder die Kurbelwelle einer nicht dargestellten Brennkraftmaschine sein.

Die Marken 11 der Inkrementscheibe 10 sind alle im gleichen Abstand angeordnet, falls die Welle 12 die Nockenwelle ist, ist pro Zylinder der Brennkraftmaschine eine Bezugsmarke vorgesehen, die beim Ausführungsbeispiel als fehlende Marke ausgebildet ist und im folgenden als Synchronlücke 13a, 13b, 13c, 13d bezeichnet wird und jeweils einem Zylinder zugeordnet ist.

Die Ausgestaltung der Inkrementscheibe 10 ist im übrigen so, daß die Länge der Marken und die Länge der Zwischenräume gleich sind. Auf den Winkel (Nockenwellenwinkel) bezogen ist ein Inkrement, also der Winkel zwischen zwei aufeinanderfolgenden Marken 11, typisch gleich 3°NW, er kann aber auch anders sein.

Die Synchronlücken weisen beim Ausführungsbeispiel zwischen zwei Rückflanken der Marken einen Abstand von 12°NW auf. Der Winkel zwischen zwei Synchronlücken wird als Segment bezeichnet, er beträgt beim dargestellten Beispiel für einen Vierzylindermotor mit vier Synchronmarken 90°NW, pro Segment sind 27 Inkremente vorhanden.

Die Inkrementscheibe 10, die beispielsweise in Pfeilrichtung rotiert, wird vom Drehzahlsensor 14, beispielsweise einem Induktivsensor, abgetastet, der drehzahlabhängige Ausgangssignale liefert, die in der Pulsformerstufe 15 in bekannter Weise zu Rechteckimpulsen geformt werden, die wiederum in der Recheneinrichtung 16 ausgewertet werden.

Die auszuwertende Pulsfolge U15 ist in der Figur la über der Zeit t aufgetragen. Die auszuwertenden Zeitintervalle laufen jeweils von einer Rückflanke der Pulsfolge U15 bis zur nächsten Rückflanke, mit den Rückflanken werden Interruptsignale INT ausgelöst.

Mit der in Figur la gewählten Darstellung, die für eine konstante Drehzahl gilt, sind die Zeiten tml und tm3 jeweils gleich lang, die Zeit tm2, die während des Vorbeilaufens der Bezugsmarke am Drehzahlsensor 14 verstreicht, ist wesentlich länger, im in Figur la dargestellten Beispiel doppelt so lang. Bei zwei fehlenden Marken wäre die Zeit dreimal so lang, bei drei fehlenden Marken viermal so lang.

In Figur 2 bezeichnet der Block 17, der Bestandteil der Recheneinrichtung 16 ist, einen Bereich, in dem die Vorverarbeitung und Überwachung des Drehzahlsensors 14 stattfindet. Dabei wird das Signal des Drehzahlsensors 14 über einen Eingang 18 zugeführt, über denselben Eingang gelangen die Interrupt-Signale INT zum Block 17.

Am Ausgang 19 des Blocks 17 wird die Durchlaufzeit tml, tm2, ... für ein Inkrement bereitgestellt, die im Block 20 als Drehzahlbasis, beispielsweise für die Winkelextrapolation dient und im Block 21 als Drehzahlbasis für die Pumpenkennfeldberechnung verwendet wird, dabei wird im Block 21 eine über eine Segmentlänge gemittelte Drehzahl ermittelt. Am Ausgang des Blocks 20 entstehen damit Signale $\Delta t_i$ und am Ausgang des Blocks 21 Drehzahlsignale $n_{NW}$. Die obengenannten Ausführungen beziehen sich dabei auf bekannte EDC-Systeme.

Ein weiterer Ausgang 22 des Blocks 17 führt auf einen Inkrement-zähler 23 am Ausgang 24 wird der erkannte Status des Drehzahlsensors bereitgestellt.

Vom Ausgang 25 des Blocks 17 führt eine Verbindung zu einem UND-Block 26, dem außerdem noch die Interrupt-Signale zugeführt werden. Durch die UND-Verknüpfung entstehen am Ausgang des UND-Blocks 26 bei geeigneter Signalform des Signals 25 die Synchronimpulse, wenn 12 die Nockenwelle ist, NW-Synchronimpulse.

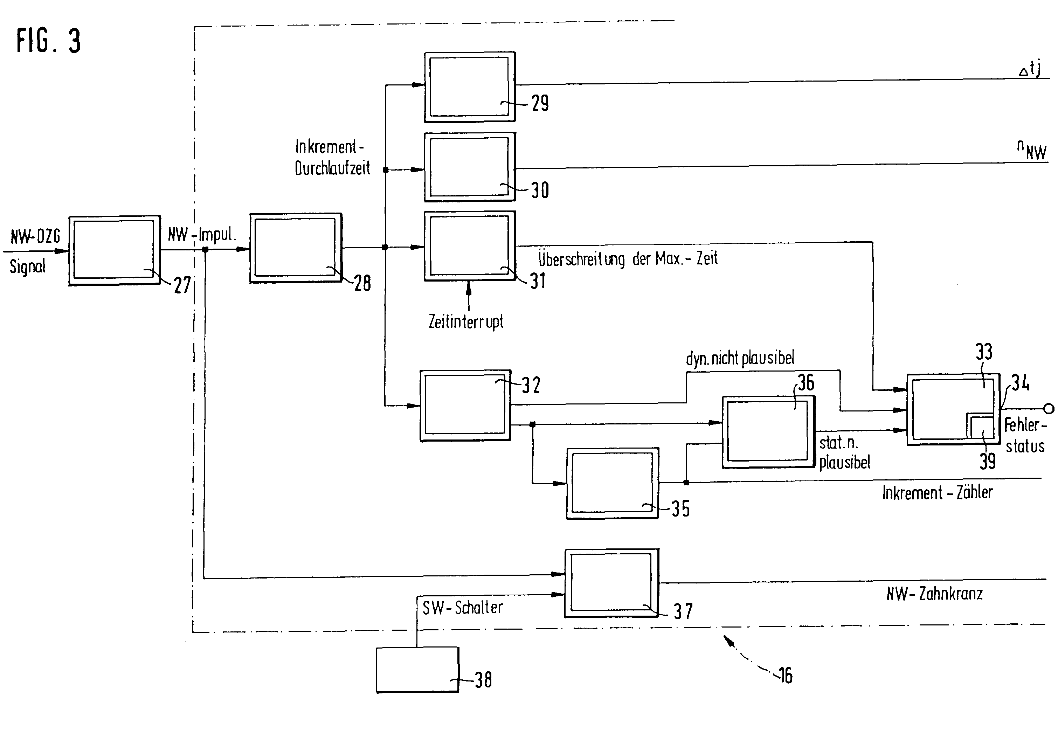

Figur 3 zeigt ein ausführlicheres Blockschaltbild zur Signalverarbeitung. Bei dieser Anordnung, die Bestandteil einer nicht dargestellten Recheneinrichtung ist, wird das Drehzahlsensorsignal einer ersten Auswerteschaltung 27 zugeführt, an deren Ausgang die weiterzuverarbeitenden Impulsfolge entsteht. Diese Impulsfolge gelangt zu einem Zähler 28, dessen Ausgang mit einem Block 29 zur Bestimmung der Momentandrehzahl verbunden ist, außerdem mit einem Block 30, in dem die mittlere Drehzahl $n_{NW}$ gebildet wird sowie mit einem Block 31, in dem eine Überwachung auf Maximalzeit erfolgt und mit einem weiteren Block 32, in dem eine dynamische Plausibilitätsüberprüfung erfolgt.

Im Block 33 findet eine Defekterkennung statt, die am Ausgang 34 zu einem Fehlerstatus führt. Weitere Blöcke sind 35, der als Inkrement-zähler arbeitet, 36 in dem eine statische Plausibilitätsüberprüfung erfolgt und 37, in dem die Synchronisationsimpulse erzeugt werden, dabei werden dem Block 37 noch Signale von einem Schwellwertschalter 38 zugeführt.

Beschreibung der Signalverarbeitung

In der Recheneinrichtung 16 werden aus der Impulsfolge U15 bzw. den zugehörigen Interrupt-Impulsen INT die für die weitere Auswertung erforderlichen Zeitintervalle gebildet, die im folgenden als Inkrement-Durchlaufzeiten tml bis tmn bezeichnet werden. Aus jedem dieser Zeitintervalle kann eine Momentandrehzahl bestimmt werden. Die Bestimmung der Momentandrehzahl ist in den Blöcken 20 bzw. 29 angedeutet und erfolgt in bekannter Weise.

Die mittlere Drehzahl der Nockenwelle wird erhalten, indem die Inkrementdurchlaufzeiten, die zu einem Segment gehören, zusammengezählt werden und aus dieser Summe die mittlere Drehzahl ermittelt wird. Die Mittelung erfolgt wie bereits erwähnt über ein Segment.

Zur Erkennung der Bezugsmarke bzw. zur Lückenerkennung und zur dynamischen Plausibilitätsüberprüfung wird im Block 17 bzw. im Block 27 der Quotient der beiden letzten aufeinanderfolgenden Inkrementdurchlaufzeiten gebildet, wobei immer die größere Inkrementdurchlaufzeit $t_{mg}$ im Zähler und die kleinere Inkrementdurchlaufzeit $t_{mk}$ im Nenner steht. Es gilt dann:

$$t_{r,j} = t_{mg} / t_{mk}.$$

Die so ermittelten Quotienten $t_{r,j}$ werden mit vorher ermittelten Schwellwerten verglichen, womit sich je nach Schwellwert bzw. Vergleichsergebnis eine Aussage bezüglich der Lückenerkennung oder der Plausibilität ableiten läßt. Wesentlich ist, daß immer die gleichartigen Zeiten an derselben Stelle der obigen Gleichung stehen.

Die Vergleiche laufen in der Recheneinrichtung 16 bzw. in einem der Blöcke 31, 32, 37 ab, die Schwellwerte S1, S2, S3 und gegebenenfalls weitere werden in der Recheneinrichtung 16 abgespeichert oder werden in einem Schwellwertschalter 38 gebildet und von dort der Recheneinrichtung 16 zugeführt.

Der Quotient wird so festgelegt, da dadurch für die weitere Auswertung die Zahl der Schwellwerte verringert wird. Die Schwellwerte sind im übrigen so festgelegt, daß auch maximale Nockenwellenbeschleunigungen unter diese Schwellwerte fallen, ihre Ermittlung wird später ausführlich beschrieben.

Den Zusammenhang zwischen den Wert des Quotienten $t_{r,j}$ und der möglichen Erkennung verdeutlicht Tabelle 1.

| | Erkennung | |
|---|---|---|
| $t_{r,j}$ | $t_{mg}$ | $t_{mk}$ |
| $t_{r,j} < 1$ | Programmfehler | |
| $1 < t_{r,j} < S1$ | Inkrement | Inkrement |
| $S1 < t_{r,j} < S2$ | nicht plausibel | |
| $S2 < t_{r,j} < S3$ | Lücke | Inkrement |
| | bzw. Inkrement | Lücke |
| $S3 < t_{r,j}$ | nicht plausibel | |

Dabei sind S1, S2 und S3 Schwellwerte, $t_{r,j}$ ist der Quotient aus zwei Durchlaufzeiten, wobei die Durchlaufzeiten entweder Inkrement-Durchlaufzeiten oder die Durchlaufzeit einer Lücke ist.

Wie Tabelle 1 verdeutlicht, lassen sich mit Hilfe der angeführten fünf verschiedenen Möglichkeiten für den Quotienten Programmfehler erkennen, ein Übergang von Inkrement zu Inkrement, nicht plausible Zustände sowie der Übergang von Lücke zu Inkrement bzw. Inkrement zur Lücke.

Als typische Werte für die Schwellwerte S1, S2 und S3 sind die in Tabelle 2 aufgelisteten Werte einzusetzen.

| Schwelle | $n_{NW} \leq 400$ min$^{-1}$ | $n_{NW} > 400$ min$^{-1}$ |
|---|---|---|
| S1 | 2,4 | 1,4 |
| S2 | 2,4 | 3,3 |
| S3 | 8,5 | 4,7 |

Die Festlegung der Schwellwerte wird so gewählt, daß maximal mögliche Nockenwellenbeschleunigungen nicht zu Fehlerkennungen führen können, dabei sind folgende Voraussetzungen für die Beschleunigung der Nockenwelle zu berücksichtigen:

Für die Abfolge Lücke-Inkrement bzw. Inkrement-Lücke wird eine Beschleunigung von b = +- 15000 min$^{-1}$ s$^{-1}$ angenommen, dies entspricht der Überlagerung der größten mittleren Motorbeschleunigung und der Drehungleichförmigkeit an der Nockenwelle.

Die Abfolge Inkrement-Inkrement wird experimentiel ausgewertet, es ergaben sich bei einzelnen Messungen folgende Werte:

| $n_{NW}$/min$^{-1}$ | 500 | 1000 | 1500 | 2200 |
|---|---|---|---|---|
| $b > 0$: $t_{r,j}$ | 1,22 | 1,24 | 1,23 | 1,33 |
| $b < 0$: $t_{r,j}$ | 1,15 | 1,27 | 1,27 | 1,30 |

Für Nockenwellendrehzahlen kleiner als 400 min$^{-1}$ wird mit einer Beschleunigung von b = 160000 min$^{-1}$ s$^{-1}$ gerechnet, es ergibt sich dann für b<0 als Grenzwert $t_{r,j} \approx 2,4$. Dies entspricht einem Motorstillstand nach 6° Nockenwellenwinkel.

Wird bei der Auswertung erkannt, daß eine Inkrementdurchlaufzeit dynamisch nicht plausibel ist, so werden zwei Fälle unterschieden:

1. Wurde nach einer Lückenerkennung oder nach einem Totalausfall des Nockenwellendrehzahlsensors noch kein statisch plausibles Segment erkannt, wird nur der Status "dynamisch nicht plausibel" gesetzt und die Inkrement-Durchlaufzeit für das nächste Inkrement bei Null gestartet. Damit wird vermieden, daß nach einem dynamisch nicht plausiblen Inkrement bzw. nach einer dynamisch nicht plausiblen Inkrementdurchlaufzeit bei dem $t_{r,j}$>S3 ist (dies tritt vor allem beim ersten oder zweiten erfaßten Inkrement auf), die Inkrement-Durchlaufzeit bis zum Zählerüberlauf weiterläuft. In diesem Fall wäre bei weiterlaufender Inkrementdurchlaufzeit erst nach dem Zählerüberlauf die Möglichkeit gegeben, daß $t_{r,j}$ im dynamisch plausiblen Bereich liegt.

2. Wurde mindestens einmal ein statisch plausibles Segment erkannt, so wird der Status "dynamisch nicht plausibel" gesetzt und die Inkrementdurchlaufzeit bis zum nächsten dynamisch plausiblen Inkrement weitergezählt. Dies geschieht auch dann, wenn der Nockenwellendrehzahlsensor vorläufig oder endgültig als Defekt erkannt wurde. Mit dieser Maßnahme lassen sich Störimpulse weitgehend ausblenden.

Nach der Initialisierung des µC (Reset beim Einschalten) wird eine Inkrementdurchlaufzeit so gewählt, daß für das erste erfaßte Inkrement Durchlaufzeiten in einem größeren Bereich plausibel sind, wodurch ein dynamischer Fehler beim ersten Inkrement weitgehend vermieden wird.

Eine weitere Plausibilitätsuntersuchung erfolgt mit Hilfe eines Inkrementzählers und einer statischen Plausibilität. Dabei wird bei jeder erkannten Bezugsmarke bzw. Synchronlücke 13a, 13b ein Inkrementzähler 23, 35 auf Null gesetzt. Bei jedem dynamisch plausiblen Drehzahlimpuls wird dieser Inkrementzähler um eins erhöht, dabei findet die Überwachung auf statische Plausibilität auch statt, wenn die Synchronlücke nicht erkannt ist.

Die statische Plausibilitätserkennung erfolgt durch Beobachtung des Inkrementzählers 23, 35 in Verbindung mit der Impulserkennung aus der dynamischen Plausibilität, Tabelle 4 verdeutlicht die Zusammenhänge.

| Erkennung aus dynamischer Plausibilität | | statisch nicht plausibel bei | sofortige Fehlerreaktion |
|---|---|---|---|
| $t_{m,j-1}$ | $t_{m,j}$ | | |
| Inkrement | Inkrement | $j \geq J_{max}$ | Inkrementzähler zurücksetzen |
| Inkrement | Lücke | $j < J_{max}$ | Inkrementzähler zurücksetzen |

Dabei bedeuten:

$t_{m,j-1}$:     letzte Inkrement-Durchlaufzeit

$t_{m,j}$:     aktuelle Inkrement-Durchlaufzeit

j:     Zählwert des Inkrementzählers

$J_{max}$:     Anzahl der Inkremente zwischen zwei Synchronlücken.

Da beim Ausführungsbeispiel die Anzahl der Inkremente zwischen zwei Synchronlücken J max gleich 27 ist, wird eine statische

Nichtplausibilität erkannt, wenn der Zählerstand des Inkrementzählers beim Auftreten der nächsten Synchronlücke nicht gleich 27 ist.

Eine weitere Überwachung findet statt, indem geprüft wird, ob innerhalb einer Maximalzeit von beispielsweise 120 Millisekunden mindestens ein Drehzahlimpuls aufgetreten ist. (Dabei wird die Maximalzeit beispielsweise als Vielfaches von 10 Millisekunden definiert, so daß eine Unsicherheit von 10 Millisekunden in der Überwachungszeit entsteht).

Alle Überwachungen, die in Block 32 durchgeführte Überwachung auf dynamische Plausibilität, die in Block 36 durchgeführte Überwachung auf statische Plausibilität und die in Block 31 durchgeführte Überwachung auf Maximalzeit lösen im Block 33 eine Defekterkennung aus, die am Ausgang 34 für den Fall, daß ein Fehler vorliegt, zu einer Fehleranzeige führt, die den vorliegenden Fehlerstatus erkennen läßt.

Damit nicht jede erkannte Nichtplausibilität zu einer Fehleranzeige führt, enthält der Block 33, der letztendlich zur Defekterkennung dient, einen Fehlerzähler 39, der bei jeder erkannten Nichtplausibilität um einen ersten Wert, beispielsweise um vier erhöht wird, dies entspricht der Anzahl der Segmente pro NW-Umdrehung. Die Kombination Erhöhung um die Zahl der Segmente im Fehlerfall und Erniedrigung um eins im Plausibilitätsfall führt dazu, daß ein einzelner, regelmäßiger Fehler pro Umdrehung nach einer Defekterkennungszeit sicher zur Defekterkennung führt.

Wird für ein Segment erkannt, daß keine Nichtplausibilität (statisch oder dynamisch) aufgetreten ist, wird der Fehlerzähler 39 um einen zweiten Wert, beispielsweise eins, zurückgesetzt. Die Zusammenhänge sollen in Figur 4 verdeutlicht werden.

Die in Figur 4 a bis i angegebenen Zählerstände sind Zählerstände des Inkrementzählers 35, der in Abhängigkeit vom vorliegenden Fehler die einzelnen Inkremente aufsummiert bis zu einem vorgegebenen Höchstwert.

In der Einrichtung zur Defekterkennung 33 werden dann in Abhängigkeit von den Zählerständen sowie von den übrigen Bedingungen Defekterkennungen vorgenommen und über die Anzeigemittel 34 angezeigt.

In Figur 4a, b, f und h sind möglicherweise auftretende Fehler angegeben, dabei entsprechen die mit I bezeichneten vertikalen Striche je einer Impulsflanke. Im unteren Teil der Figuren sind mit durchgezogener Linie die Sollzählerstände Zs des Inkrementzählers 35 angegeben, gestrichelt sind die tatsächlichen Ist-Zählerstände Zi eingetragen, die sich aufgrund der angegebenen Störungen einstellen.

In Figur 4a ist innerhalb eines Segmentes ein zusätzlicher Störimpuls aufgetreten, der zwischen den einzelnen Impulsflanken liegt. In Figur 4b ist als Störung ein fehlender Impuls angegeben, der beispielsweise infolge eines Markenausfalls auf der Geberscheibe aufgetreten ist.

Bei einem zusätzlichen Störimpuls ist der nach Segmentende vorliegende Zählerstand Zi um eins höher als der Soll-Zählerstand Zs, es gilt Zi = Zs + 1, Zi = 27 + 1 = 28, damit ist eine statische Nichtplausibilität für ein Segment erkannt und der Fehlerzähler FZ wird um vier erhöht. Bei b) gilt analog Zi = Zs - 1 und der Fehlerzähler FZ wird ebenfalls um vier erhöht.

In Figur 4f besteht der Fehler darin, daß die Bezugsmarkenlücke nicht erkannt wird und in Figur 4h wird irrtümlicherweise eine Bezugsmarke erkannt, obwohl keine vorlieg. Dabei zählt im ersten Fall der Inkrement-Zähler 35 auf Zs + 1 = 28 und wird dann zurückgesetzt, da dabei eine statische Nichtplausibilität erkannt wird, wird der Fehlerzähler um vier erhöht. Im zweiten Fall wird der Inkrement-zähler 35 durch die irrtümlich erkannte Lücke zu früh zurückgesetzt, der letzte Zählerstand ist kleiner als 27, so daß eine statische Nichtplausibilität erkannt wird. Bis zum tatsächlichen Auftreten der Synchronmarke erreicht der Zähler den Wert 27 wieder nicht, so daß eine weitere statische Nichtplausibilität erkannt wird. Der Fehlerzähler wird zweimal um vier erhöht.

In den Figuren 4c, d, e, g, i und j sind die Zählergebnisse für verschiedene Fehlerfälle über einen längeren Zeitraum aufgetragen. Dabei ist ganz oben (1) das Auftreten der Lücke L angegeben, darunter (2) ist der Sollverlauf des Inkrementzählers in vereinfachter Darstellung, darunter (3) mit durchgezogener Linie der Istverlauf des Fehlerzählers und darunter (4) der Zählerstand des Fehlerzählers zum Zeitpunkt des Auftretens einer Synchronmarke angegeben.

In den beiden unteren Bereichen der Zeichnung sind Signalverläufe angegeben, dabei ist in der zweituntersten Kurve (5) angegeben, ob die Plausibilität verletzt ist (High-Signal) oder nicht verletzt ist (Low-Signal), während der unterste Signalverlauf (6) aufzeigt, ob ein Defekt erkannt ist (High-Signal) oder ob der Sensor intakt ist (Low-Signal).

Beim Fehler nach c) treten Störimpulse auf, die dynamisch plausibel sind und einmal pro Zylinder auftreten, analog wäre ein Zahnausfall zu erkennen. Der Fehlerzähler wird mit jedem erkannten Störimpuls um 4 erhöht und erst nach einem störungsfreien Segment wieder um 1 erniedrigt.

Nachdem die erste statische Nichtplausibilität erkannt ist und der Fehlerzähler auf 4 ist, zeigt der Signalverlauf von (5) durch Wechsel von Low auf High, daß eine Nichtplausibilität vorliegt. Die Defekterkennung nach Signal (6) erfolgt erst nachdem ein Zählerstand von 16 erreicht wird. Nach einem fehlerfreien Segment wechselt das Signal nach (5) auf Low und signalisiert Plausibilität, während die Defektanzeige erst nach 16 (von 15 bis Null) fehlerfreien Segmenten wieder auf Low springt.

Da der Fehler nach c) bei jedem Zylinder bzw. Segment auftritt, handelt es sich um einen schweren Fehler, der nach 4 Zylindern eine Fehlererkennung auslöst.

Bei d) treten Störimpulse, die dynamisch plausibel sind (gilt sinngemäß auch für Zahnausfall) immer nur beim gleichen Zylinder auf, also ein Mal pro Umdrehung. Der Fehlerzähler wird demnach bei auftreten eines Fehlers um 4 erhöht und in den nächsten drei fehlerfreien Segmenten jeweils um 1 erniedrigt.

Die statische Nichtplausibilität wird nur nach dem nicht plausiblen Segment angezeigt, eine Defekterkennung erfolgt nach 49 Segmenten, d.h. nach 12 Nockenwellenumdrehungen plus einem Segment. Bei dem Fehler handelt es sich um einen leichten Fehler. Das Ende der Fehlererkennung wird angezeigt, wenn 16 Segmente lang kein Fehler aufgetreten ist.

Im Beispiel nach e) treten Störimpulse auf, die dynamisch nicht plausibel sind. Diese Störimpulse werden jedoch ignoriert, falls das nächste Inkrement dynamisch plausibel ist, der Fehlerzähler wird dann nicht erhöht, sondern nach korrektem Durchlauf eines Segmentes um eins erniedrigt.

Beim beispiel nach g) wird eine Lücke zu wenig erkannt, dieser Fehler tritt also zweimal pro Umdrehung auf. Da die Lücke nicht erkannt wird, wird der Fehlerzähler jeweils um vier erhöht, da bei jedem Segment die statische Plausibilität verletzt ist, eine Defekterkennung erfolgt nach dem vierten Segment. Ein solcher Fehler wird demnach als schwerer Fehler erkannt. Die Intakterkennung erfolgt nach 16 fehlerfreien Segmenten.

Im Beispiel nach i) wird pro Segment eine Lücke zuviel erkannt, eine statische Nichtplausibilität wird dann erkannt bei der irrtümlich erkannten Lücke, bei der tatsächlich erkannten Lücke, da dann der Inkrementzähler noch nicht auf seinem Sollstand (im Beispiel 27 ist) und wieder bei der nächsten irrtümlich erkannten Lücke.

Bei der ersten erkannten Nichtplausibilität wird das Signal(5) in den High-Zustand gesetzt und bereits nach dem zweitenSegment erfolgt eine Fehlererkennung, die nach 16 fehlerfreien Segmenten wieder rückgängig gemacht wird.

Beim Beispiel j) wird einmal pro Nockenwellenumdrehung eine Lücke zuviel erkannt. Dabei wird in dem Segment, in dem die Fehlerkennung erfolgt zweimal eine statische Nichtplausibilität erkannt, die den Fehlerzähler jeweils um vier erhöht. In den übrigen Segmenten ist statische Plausibilität gegeben und der Fehlerzähler wird jeweils um eins zurückgesetzt. Die Defekterkennung wird zwei NW-Umdrehungen nach dem ersten Auftreten des Fehlers angezeigt und nach 16 fehlerfreien Segmenten wieder rückgängig gemacht.

Mit den erkannten Fehlfunktionen kann nach der endgültigen Defekterkennung ein spezieller Fehlerstatus angezeigt werden, z.B.:

| Fehlerstatus | 0 | kein Fehler |
|---|---|---|
| | 2 | dynamische oder statische Plausibilität ist verletzt |
| | 8 | nach dem letzten Drehzahl-Interrupt wurde die Maximalzeit überschritten |

Wird das erfindungsgemäße Verfahren im Zusammenhang mit einer bereits bekannten elektronischen Motorsteuerung, beispielsweise einer Electronic Diesel Control (EDC) eingesetzt, steht noch ein zweiter Drehzahlsensor bzw. eine Ersatzfunktion zur Verfügung, es kann bei Fehlerstatus 2 auf die Ersatzfunktion bzw. zweite Drehzahlsensor umgeschaltet werden, falls diese intakt ist, andernfalls muß der Motor abgeschaltet werden.

Bei Fehlerstatus 8 muß unterschieden werden, ob der zweite Drehzahlgeber intakt oder defekt ist, weiterhin ist zu unterscheiden, ob die Ersatzfunktion intakt oder defekt ist.

Es sind damit folgende Fälle zu unterscheiden:

1. Zweiter DZG intakt und Ersatzfunktion intakt

Liegt die Motordrehzahl unter einer Schwelle für Motorstillstand wird Stillstand erkannt oder gegebenenfalls der Motor abgestellt.

Liegt die Motordrehzahl über dieser Schwelle, wird auf Totalausfall des NW-Drehzahlgebers erkannt und auf die Ersatzfunktion bzw. zweite Drehzahlgeber umgeschaltet.

2. Zweiter DZG intakt und Ersatzfunktion defekt

Liegt die Motordrehzahl unter einer Schwelle für Motorstillstand wird Stillstand erkannt oder gegebenenfalls

EP 0 584 566 B1

der Motor abgestellt.

Liegt die Motordrehzahl über dieser Schwelle, wird auf Totalausfall des NW-Drehzahlgebers erkannt und der Motor abgeschaltet (da Ersatzfunktion defekt ist)

3. Zweiter Drehzahlgeber defekt und Ersatzfunktion intakt

Erkennung auf Motorstillstand bzw. Abstellen des Motors

4. Zweiter Drehzahlgeber defekt und Ersatzfunktion defekt

Erkennung auf Motorstillstand bzw. Abstellen des Motors
Die erkannten Fehler können beispielsweise in einem $E^2$PROM abgespeichert werden.

**Patentansprüche**

1. Verfahren zur Defekterkennung bei der Auswertung der Ausgangssignale eines sich periodisch wiederholende Signale liefernden Sensors, insbesondere eines Drehzahlsensors, die als drehzahlabhängige Impulsfolge vorliegen, aus der in einer Recheneinrichtung durch Vergleich der Zeitabstände zwischen zwei Impulsen oder zwischen gleichartigen Impulsflanken statische und/oder dynamische Nichtplausibilitäten als Fehler erkannt werden, dadurch gekennzeichnet, daß nach jeder erkannten Nichtplausibilität eine Fehlerzähleinrichtung um einen ersten Wert erhöht und nach jedem als plausibel erkannten Bereich die Fehlerzähleinrichtung um einen zweiten Wert reduziert wird, wobei der erste Wert größer ist als der zweite und die Defekterkennung erst nach Erreichen eines vorgegebenen Zählerstandes ausgelöst wird.

2. Verfahren nach Anspruch 1, dadurch gekennzeichnet, daß die drehzahlabhängige Impulsfolge dem Ausgangssignal eines Drehzahlsensors entspricht, der eine mit der Kurbel- oder der Nockenwelle einer Brennkraftmaschine verbundene Scheibe, insbesondere eine Inkrementscheibe mit zylinderspezifischen Markierungen abtastet und beim Passieren jedes Inkrementes Impulse abgibt und daß die Fehlerzähleinrichtung Bestandteil eines Steuergerätes der Brennkraftmaschine ist.

3. Verfahren nach einem der vorhergehenden Ansprüche, dadurch gekennzeichnet, daß eine Recheneinrichtung, vorzugsweise einer μC vorgesehen ist, in der die erforderlichen Rechen- und Zählvorgänge ablaufen.

4. Verfahren nach einem der vorhergehenden Ansprüche, dadurch gekennzeichnet, daß nach der Defekterkennung geeignete Mittel aktiviert werden, die einen Notlauf der Brennkraftmaschine erlauben oder ein vollständiges Abschalten der Brennkraftmaschine einleiten.

5. Verfahren nach Anspruch 3 oder 4, dadurch gekennzeichnet, daß überprüft wird, ob ein zweites Drehzahlsignal und/oder eine Ersatzfunktion vorliegt und dieses Drehzahlsignal und/oder die Ersatzfunktion zur Durchführung eines Notlaufes verwendet wird.

6. Verfahren nach einem der vorhergehenden Ansprüche, dadurch gekennzeichnet, daß zur Erkennung der statischen Plausibilität die den Inkrementen zuordenbaren Impulse gezählt werden und die zwischen zwei zylinderspezifischen Marken gezählten Impulse mit einem zu erwartenden Zählwert verglichen werden und bei Abweichung von diesem Wert eine Nichtplausibilität erkannt wird.

7. Verfahren nach einem der vorhergehenden Ansprüche 2-6, dadurch gekennzeichnet, daß der erste Wert, um den die Fehlerzähleinrichtung erhöht wird, der Zahl der auf der Inkrementscheibe vorhandenen Synchronlücken bzw. der zugehörigen Segmente entspricht und damit auch der Zylinderzahl entspricht und der zweite Wert gleich Eins ist.

**Claims**

1. Method for defect identification in the evaluation of the output signals of a sensor, in particular a rotational speed sensor, supplying periodically recurring signals, which are present in the form of a rotational speed-dependent pulse train from which static and/or dynamic implausibilities are identified as faults in a computing device by com-

8

parison of the time intervals between two pulses or between identical pulse edges, characterized in that a fault counting device is increased by a first value after each identified implausibility and the fault counting device is reduced by a second value after each range identified as plausible, the first value being greater than the second value and the defect identification being triggered only after a predetermined counter reading has been reached.

2. Method according to Claim 1, characterized in that the rotational speed-dependent pulse train corresponds to the output signal of a rotational speed sensor which senses a disc, in particular an incremental disc with cylinder-specific markings, connected to the crankshaft or to the camshaft of an internal combustion engine and emits pulses during the passing of each increment, and in that the fault counting device is part of a control unit of the internal combustion engine.

3. Method according to one of the preceding claims, characterized in that a computing device, preferably a μC, is provided in which the requisite computation and counting operations proceed.

4. Method according to one of the preceding claims, characterized in that after the defect identification, suitable means are activated which permit emergency running of the internal combustion engine or initiate a complete switch-off of the internal combustion engine.

5. Method according to Claim 3 or 4, characterized in that a check is made to see whether a second rotational speed signal and/or a backup function are/is present and this rotational speed signal and/or the backup function are/is used for implementing emergency running.

6. Method according to one of the preceding claims, characterized in that in order to identify the static plausibility, the pulses which can be assigned to the increments are counted and the pulses counted between two cylinder-specific markers are compared with a count value to be expected and an implausibility is identified in the event of deviation from this value.

7. Method according to one of the preceding Claims 2-6, characterized in that the first value by which the fault counting device is increased corresponds to the number of synchronizing gaps present on the incremental disc, or to the associated segments, and hence also corresponds to the number of cylinders, and the second value is equal to one.

**Revendications**

1. Procédé de détection d'un défaut dans l'analyse des signaux de sortie d'un capteur fournissant des signaux répétés périodiquement, notamment d'un capteur de vitesse de rotation, ces signaux se présentant sous la forme d'une suite d'impulsions dépendant de la vitesse de rotation, à partir de laquelle dans une installation de calcul et par comparaison des intervalles entre deux impulsions ou entre deux flancs d'impulsion de même nature on reconnaît comme défauts des non-plausibilités statistiques et/ou dynamiques,
caractérisé en ce que
après chaque non-plausibilité, reconnue, on augmente d'une première valeur une installation de comptage de défauts et après chaque plage reconnue comme plausible on réduit de nouveau d'une seconde valeur l'installation de comptage de défauts,
la première valeur étant supérieure à la seconde valeur et la reconnaissance de défauts étant déclenchée seulement une fois que l'on atteint un état de comptage prédéterminé.

2. Procédé selon la revendication 1,
caractérisé en ce que
la suite des impulsions dépendant de la vitesse de rotation correspond au signal de sortie d'un capteur de vitesse de rotation qui détecte un disque associé au vilebrequin ou à l'arbre à cames d'un moteur à combustion interne, notamment un disque incrémental muni de repères spécifiques aux cylindres et au passage de chaque incrément il fournit des impulsions et l'installation de comptage de défauts fait partie d'un appareil de commande du moteur à combustion interne.

3. Procédé selon l'une quelconque des revendications précédentes,
caractérisé par
une installation de calcul, de préférence un microprocesseur, qui effectue les opérations de calcul et de comptage nécessaires.

4.  Procédé selon l'une quelconque des revendications précédentes,
    caractérisé en ce qu'
    après la détection de défauts, on active des moyens appropriés qui permettent un fonctionnement de secours du moteur à combustion interne ou produisent une coupure totale du moteur.

5.  Procédé selon l'une des revendications 3 ou 4,
    caractérisé en ce qu'
    on vérifie si un second signal de vitesse de rotation et/ou une fonction de rechange existe et on utilise ce signal de vitesse de rotation et/ou la fonction de rechange pour effectuer un fonctionnement de secours.

6.  Procédé selon l'une quelconque des revendications précédentes,
    caractérisé en ce que
    pour reconnaître la plausibilité statistique, on compte les impulsions associées aux incréments et on compare les impulsions comptées entre deux repères spécifiques aux cylindres à une première valeur de comptage prévisible et en cas de différence avec cette valeur on reconnaît une non-plausibilité.

7.  Procédé selon l'une quelconque des revendications 2 à 6,
    caractérisé en ce que
    la première valeur suivant laquelle on augmente l'installation de comptage de défauts correspond au nombre d'intervalles de synchronisation ou de segments correspondants existant sur le disque incrémental et ce nombre correspond ainsi également au nombre de cylindres et la seconde valeur est égale à l'unité.

FIG.1

FIG.1a

U15

INT

tm1     tm 2     tm 3

→ t

FIG.2

16

17

20

Durchlaufzeit für 1 Ink.

19

$\Delta t_j$

21

$n_{NW}$

22

23

NW DZG
Inter.    18

24

25

26

UND

# FIG. 3

EP 0 584 566 B1

NW-DZG Signal

NW-Impul.

Inkrement-Durchlaufzeit

$\Delta t_j$

$n_{NW}$

Überschreitung der Max.- Zeit

Zeitinterrupt

dyn. nicht plausibel

stat. n. plausibel

Fehler-status

Inkrement-Zähler

NW-Zahnkranz

SW-Schalter

27

28

29

30

31

32

33

34

35

36

37

38

39

16

FIG.4a

$Z_i$, $Z_s$

FZ

Istverlauf mit Fehler →    ← Sollverlauf

EP 0 584 566 B1

FIG.4b

FIG. 4c

# FIG. 4d

L

Zi,s

Zi,s

0 0 0 4 3 2 1 5 4 ... 11 15 14 13 12 16 15 14 13 16 15 14 13 16 15 14 13 12 11 10 9 8 7 6 5 4 3 2 1 0

PLA

# FIG. 4e

L

Zi

FZ

EP 0 584 566 B1

FIG. 4f

FIG. 4g

FIG. 4h

EP 0 584 566 B1

# FIG. 4i

Zuviel erkannt

1 Lücke            1 x pro   Zylinder

Lücke L

$Z_s$

FZ

0     4   8     12   16     16   16     16   16     16   16      15      14   •••   1      0

PLA

EP 0 584 566 B1

EP 0 584 566 B1

# FIG. 4j

Zuviel erkannt

1 Lücke          1 x pro NW Umdrehung